Europäisches Patentamt

European Patent Office

Office européen des brevets

(19)

(11) **EP 0 590 372 B1**

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(51) Int Cl.⁶: **H02M 7/217**, H02M 7/12, G05F 1/613

(21) Anmeldenummer: **93114447.1**

(22) Anmeldetag: **08.09.1993**

(54) **Schaltungsanordnung zum Erzeugen einer Gleichspannung**

Circuit arrangement for the generation of a direct voltage

Arrangement de circuit pour la génération d'une tension continue

(84) Benannte Vertragsstaaten:
**CH DE ES FR GB IT LI NL SE**

(30) Priorität: **30.09.1992 DE 4232829**

(43) Veröffentlichungstag der Anmeldung:
**06.04.1994 Patentblatt 1994/14**

(73) Patentinhaber: **Siemens Nixdorf Informationssysteme Aktiengesellschaft 33102 Paderborn (DE)**

(72) Erfinder: **Pollmeier, Werner D-33415 Verl (DE)**

(74) Vertreter: **Fuchs, Franz-Josef, Dr.-Ing. et al Postfach 22 13 17 80503 München (DE)**

(56) Entgegenhaltungen:
AT-B- 374 633      US-A- 4 268 899
US-A- 4 683 529      US-A- 4 940 929

**Beschreibung**

Die Erfindung betrifft eine Schaltungsanordnung zum Erzeugen einer Gleichspannung aus einer Wechselspannung vorgegebener Frequenz, wobei mit einem ersten Umformer, einem Hochsetzsteller, aus der Wechselspannung eine Zwischenspannung und mit einem zweiten Umformer, einem primär getakteten Gleichspannungswandler, die Ausgangsspannung erzeugt wird.

Dabei obliegt dem Hochsetzsteller die Aufgabe, einen blindleistungsarme Stromaufnahme des Netzteils zu bewirken, indem er als Schaltregler mit gegenüber der Netzfrequenz hoher Schaltfrequenz ausgeführt ist. Schaltungen dieser Art sind aus der Zeitschrift "Siemens Components" 24 (1986), S. 103-107, bekannt. Dabei hat der Hochsetzsteller auch die Aufgabe, bei niedriger gewählter Netzspannung, z.B. 120V, durch eine Spannungsverdopplerschaltung die gleiche Zwischenspannung von z.B. 310V zu erzeugen wie einer Netzspannung von 220V. Eine Anordnung dieser Art ist beispielsweise aus der US Patentschrift 4,831,508 bekannt. Hier wird auch, wie im Ausführungsbeispiel angegeben, ein Wechselstromschalter im Hochsetzsteller verwendet und eine Gleichrichtung am Ausgang durchgeführt.

In den bislang bekannten Schaltungsanordnungen der genannten Art wird die Zwischenspannung durch den Hochsetzregler auf einen konstanten Wert geregelt. Bei absinkender Netzspannung wird damit die Stromaufnahme bei gleichzeitig vergrößerter Spannungsdifferenz zwischen Netzspannung und Zwischenspannung erhöht. Der Hochsetzsteller wird bei diesem Regelprozeß stark belastet, was zu einer vergrößerten Bauform und zu einem erhöhten technischen Aufwand führt.

Bei der vorliegenden Erfindung hingegen wird die Zwischenspannung nicht von einem konstanten Sollwert aus geregelt, sondern von der Eingangsspannung. Insbesondere wird hierzu der Spitzenwert herangezogen. Damit ist die Bandbreite, innerhalb derer der Hochsetzsteller funktionsfähig sein und bleiben muß, verkleinert, was sich vorteilhaft auf die Auswahl und Dimensionierung der Bauteile auswirkt.

Die Erfindung verwendet dabei eine getrennte Regelung für die positive und die negative Halbwelle der Eingangsspannung.

Ein Ausführungsbeispiel der Erfindung wird im folgenden anhand der Zeichnungen erläutert. Darin zeigt:

Figur 1     eine Schaltungsanordnung zum Erzeugen einer Gleichspannung nach dem Stand der Technik,

Figur 2     eine Schaltungsanordnung nach dem Stand der Technik für das Ausführungsbeispiel der Erfindung,

Figur 3     ein erstes Ausführungsbeispiel einer Schalteinheit,

Figur 4     ein zweites Ausführungsbeispiel einer Schalteinheit,

Figur 5     ein drittes Ausführungsbeispiel einer Schalteinheit,

Figur 6     ein Ausführungsbeispiel der Erfindung mit in Funktionsblökken zusammengefaßten Steuerungsteilen, und

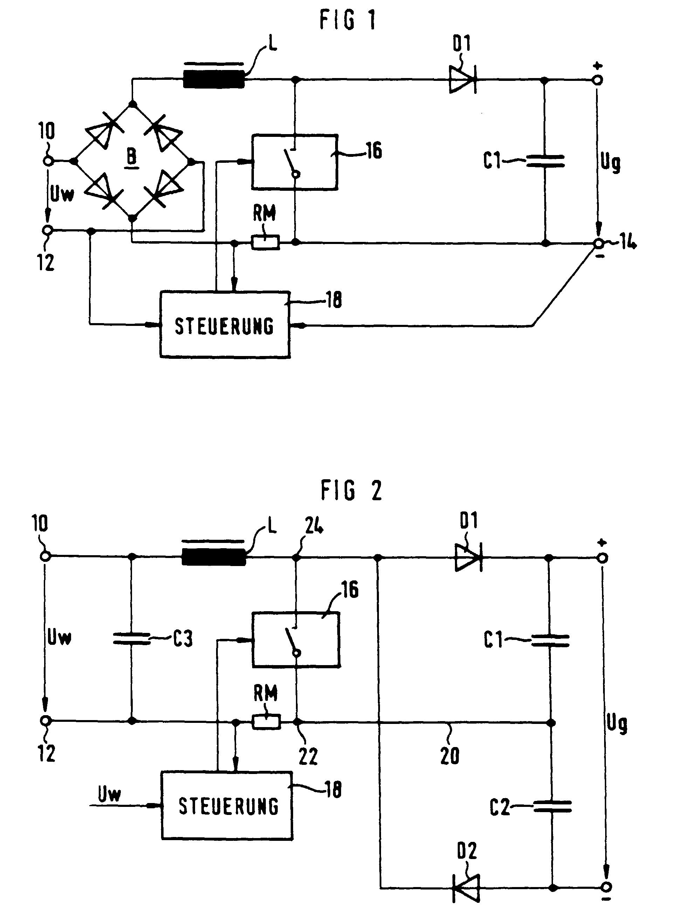

In Figur 1 ist eine bekannte Schaltungsanordnung zum Erzeugen einer Gleichspannung aus einer Wechselspannung U mit beispielsweise 120 V und vorgegebener Frequenz, beispielsweise 60 Hz, dargestellt. An Klemmen 10, 12 der Wechselspannungsquelle ist ein Brückengleichrichter B angeschlossen, dessen einer Gleichspannungsausgang zu einer Ausgangsklemme 14 und dessen anderer Gleichspannungsausgang zu einer Speicherdrossel L geführt ist. Die Speicherdrossel L ist von Gleichstrom durchflossen, der zu einer Schalteinheit 16 und zu einer Gleichrichterdiode D1 verzweigt wird.

Die Schalteinheit 16 wird durch eine Steuerung 18 zu Schaltvorgängen hoher Frequenz, beispielsweise 60 kHz, veranlaßt, so daß in der Speicherdrossel L ein impulsförmiger Strom fließt, wobei der zeitabhängige mittlere Strom die gleiche Kurvenform wie die Wechselspannung Uw hat. Hierzu tastet die Steuerung 18 die Kurvenform der Wechselspannung Uw sowie die Spannung an einem Strommeßwiderstand RM ab, und gibt an die Schalteinheit 16 impulsbreitenmodulierte Signale ab. Ferner erfaßt die Steuerung 18 die Gleichspannung Ug am ersten Ladekondensator C1 und stellt die der Schalteinheit 16 zugeführten Signale so ein, daß diese Gleichspannung Ug auf einem konstanten Wert gehalten wird. Weitere Einzelheiten der Wirkungsweise dieser Schaltung sind in der Zeitschrift "Siemens Components" 24 (1986), S. 103 bis 107, "TDA 41814 - Integrierte Steuerschaltung für sinusförmige Netzstromaufnahme", beschrieben.

Bei der Schaltungsanordnung nach Figur 1 fließt durch die Speicherdrossel L in beiden Halbwellen der Wechselspannung Uw jeweils ein Gleichstrom, der über die Diode D1 den Ladekondensator C1 auf den jeweiligen Spitzenwert der Spannung an der Schalteinheit 16 auflädt. Wenn diese Schaltungsanordnung zur Spannungsverdopplung am 120-Volt Wechselspannungsnetz eingesetzt wird, so fließen durch die Schalteinheit 16 Ströme mit hohem Effektivwert, die eine hohe Verlustleistung erzeugen. Die an der Schalteinheit 16 auftretende Verlustleistung wird indirekt noch dadurch erhöht, daß sie einer hohen Sperrspannung ausgesetzt ist, die gleich der Gleichspannung Ug ist. Bei Verwendung eines Transistors als Schalteinheit 16 muß dieser eine entsprechend hohe Spannungsfestigkeit haben.

Eine hohe Spannungsfestigkeit bedingt aus halbleitertechnischen Gründen einen großen Durchlaßwiderstand im durchgeschalteten Zustand des Transistors und führt somit zu hoher Verlustleistung. Außerdem werden in den Gleichrichterdioden des Brückengleichrichters B weitere Verluste erzeugt, denn durch den Brückengleichrichter B muß der gesamte Strom der Schaltungsanordnung geleitet werden.

In Figur 2 ist ein Ausführungsbeispiel nach der Erfindung dargestellt. Gleiche Bauelemente wie in Figur 1 sind gleich bezeichnet. Die Schaltungsanordnung nach Figur 2 stimmt hinsichtlich der schaltungstechnischen Anordnung der Speicherdrossel L, der Schalteinheit 16, der Steuerung 18, der Gleichrichterdiode D1 des Ladekondensators C1, und des Strommeßwiderstands RM mit der in Figur 1 gezeigten überein. Die Speicherdrossel L ist jedoch anders als in Fig. 1 direkt an die Klemme 10 der Wechselspannungsquelle angeschlossen. Ferner ist ein zweiter Ladekreis, bestehend aus einer Gleichrichterdiode D2 und einem Ladekondensator C2, vorgesehen, wobei die Kathode der Gleichrichterdiode D2 mit der Anode der Gleichrichterdiode D1 und die Anode der Gleichrichterdiode D2 mit einem Anschluß des Ladekondensators C2 verbunden ist. Der andere Anschluß des Ladekondensators C2 ist mit dem Ladekondensator C1 sowie einer Leitung 20 verbunden, die zur Klemme 12 führt. Die Gleichspannung Ug wird an den beiden Ladekondensatoren C1, C2 abgegriffen. Die aus den Bauteilen D1, D2, C1 und C2 aufgebaute Schaltung bildet eine Gegentakt-Spannungsverdopplerschaltung. Zwischen die Klemmen 10, 12 ist ein Glättungskondensator C3 geschaltet, der zur Glättung der von der Speicherdrossel L hervorgerufenen Spannungsimpulsen dient.

Die Betriebsweise der Schaltungsanordnung nach Figur 2 wird im folgenden für eine sinusförmige Wechselspannung Uw beschrieben. In der ersten, positiven Halbwelle fließt auf Grund der Schaltvorgänge der Schalteinheit 16 durch die Speicherdrossel L ein impulsförmiger positiver Strom. Über die Gleichrichterdiode D1 wird der Ladekondensator C1 mit jedem Impuls auf den jeweiligen Spitzenwert aufgeladen. Die Stromspitzen und der mittlere Stromwert durch die Speicherdrossel L haben dieselbe sinusförmige Kurvenform wie die erste Halbwelle. In der zweiten, negativen Halbwelle fließt durch die Speicherdrossel L ein negativer impulsförmiger Strom, durch den der Ladekondensator C2 auf die negative Scheitelspannung der Wechselspannung Uw aufgeladen wird. An den beiden Ladekondensatoren C1, C2 kann somit der doppelte Wert der Amplitude der Wechselspannung Uw abgegriffen werden. Bei Betrieb der Schaltungsanordnung nach Figur 2 an einem Wechselspannungsnetz mit effektiver Wechselspannung von 120 V ergibt sich eine Gleichspannung Ug von 340 V. Der durch die Schalteinheit 16 fließende effektive Strom ist verglichen mit dem Strom durch die Schalteinheit 16 nach Fig. 1 bei gleicher Wechselspannung Uw und bei gleicher Abgabeleistung um den Faktor 2 verringert, da mit zunehmendem Momentanspannungswert innerhalb einer Netzwechselspannungshalbwelle die Einschaltdauer der Schalteinheit 16 abnimmt. Beim Spitzenwert ist die Einschaltdauer gleich Null. Bei der Schaltungsanordnung nach Fig. 1 beträgt dagegen die relative Einschaltdauer bezogen auf die maximale Einschaltdauer 50 %, da hier eine Spannungsverdopplung erfolgt.

An der Schalteinheit 16 nach Fig. 2 fällt im gesperrten Zustand maximal die halbe Gleichspannung Ug ab. Diese Sperrspannung ist gegenüber der bei der Schaltungsanordnung nach Figur 1 halbiert. Dies bedeutet, daß Bauelemente zum Realisieren der Schalteinheit 16 eingesetzt werden können, die eine geringe Spannungsfestigkeit haben können. Bei derartigen Bauelementen ist aufgrund einer anderen Halbleiterdotierung der Durchlaßwiderstand im durchgeschalteten Zustand verringert, so daß eine entsprechend verringerte Verlustleistung auftritt. Beispielsweise verringert sich der Durchlaßwiderstand eines Feldeffekt-Transistors bei Halbierung der Sperrspannungsfestigkeit von 500 V auf 250 V von 0,4 Ohm auf 0,14 Ohm.

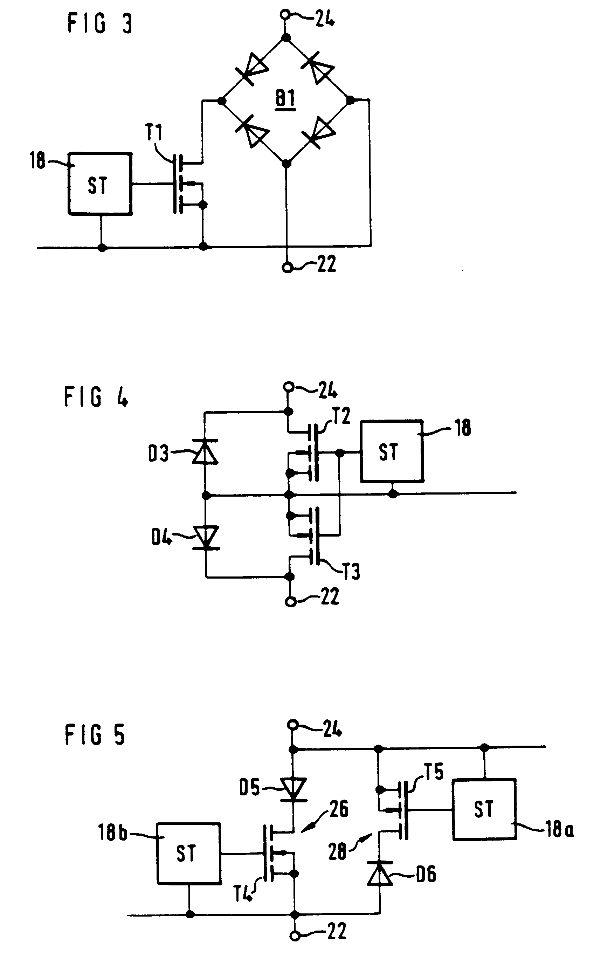

In Figur 3 ist ein erstes Ausführungsbeispiel der Schalteinheit 16 dargestellt. Zwischen die Anschlüsse 22, 24 ist ein Brückengleichrichter B1 geschaltet, dessen Brückendiagonale mit dem Drainanschluß bzw. mit dem Sourceanschluß eines Feldeffekt-Transistors T1, der als Leistungstransistor ausgebildet ist, verbunden ist. Die Steuerung 18, die mit dem Gateanschluß des Transistors T1 verbunden ist, hat das gleiche Bezugspotential wie der Transistor T1. Der Brückengleichrichter B1 wandelt den ihm über die Anschlüsse 22, 24 zugeführten Wechselstrom in einen für den Transistor T1 schaltbaren Gleichstrom um.

In Figur 4 besteht die Schalteinheit 16 aus zwei in Serie geschaltete Feldeffekt-Transistoren T2, T3, deren Source-Elektroden miteinander verbunden sind. Die Source-Drain-Strecke eines jeden Transistors T2, T3 ist durch je eine Diode D3, D4 überbrückt. Die Dioden D3 bzw. D4 sind jeweils in Sperrichtung zur entsprechenen Source-Drain-Strecke der Transistoren T2 bzw. T3 gepolt. Der an den Anschlüssen 22, 24 zugeführte Wechselstrom wird während der positiven Halbwelle vom Transistor T2 durchgeschaltet und während der negativen Halbwelle vom Transistor T3. Die Dioden D3, D4 dienen zum Umpolschutz. Es ist auch möglich, die interne parasitäre Feldeffekt-Transistordiode jeweils als Umpolschutz zu nutzen.

In Figur 5 besteht die Schalteinheit 16 aus zwei parallel geschalteten Serienschaltungen 26, 28. Die Serienschaltung 26 umfaßt eine Diode D5 und einen in Serie geschalteten Feldeffekt-Transistor T4. Die Serienschaltung 28 besteht aus einer Diode D6 und einem in Serie geschalteten Feldeffekt-Transistor T5. Die Transistoren T4 bzw. T5 werden von galvanisch getrennten Steuerungen 18b bzw. 18a angesteuert. Die Serienschaltung 26 schaltet den Strom zwischen den Anschlüssen 24, 22 während der positiven Halbwelle der Wechselspannung Uw durch, während die Serienschaltung 28 den Strom während der negativen Halbwelle durchschaltet.

Alternativ zu den Feldeffekt-Transtoren in den Figuren 3 bis 5 können auch bipolare Halbleiterschalter, wie beispielsweise Transistoren oder Thyristoren verwendet werden. Außerdem ist es zweckmäßig, mehrere Transistoren einander parallel zu schalten, so daß sich der Gesamtdurchlaßwiderstand verringert.

Die Schaltverlustleistung, die am Transistor T1 bei der Schalteinheit 16 nach Figur 3 auftritt, berechnet sich zu:

$$Pv = I^2eff \ Rein/n + 2 \ Im \ Ud \qquad (1).$$

Die Schaltverlustleistung an den Transistoren T2, T3 bzw. T4, T5 der Schalteinheiten 16 nach den Figuren 4 bzw. 5 berechnet sich zu:

$$Pv = I^2eff \ 2 \ Rein/n + Im \ Ud \qquad (2).$$

In den Gleichungen (1) bzw. (2) ist Pv die Schaltverlustleistung, Ieff der Effektivwert des Stroms durch den bzw. die Transistoren, Rein der Durchlaßwiderstand, Im der arithmetische Mittelwert des Stroms, Ud die Diodendurchflußspannung und n die Anzahl der jeweils parallel geschalteten Transistoren.

Den oben angegebenen Gleichungen (1) bzw. (2) ist zu entnehmen, daß die geringste Schaltverlustleistung beim Ausführungsbeispiel nach Figur 3 erzielt wird. Da der arithmetische Mittelwert des Stroms Im durch die Schalteinheit kleiner als der durch die Speicherdrossel L fließende Strom ist, ist die am Brückengleichrichter B1 (Fig. 3) erzeugte Verlustleistung erheblich geringer als bei der bekannten Schaltungsanordnung nach Figur 1. Weiterhin ist anhand der Gleichungen (1) bzw. (2) zu erkennen, daß die Schaltverlustleistung linear vom Duchlaßwiderstand Rein abhängt. Da bei den Schalteinheiten nach der Erfindung Transistoren mit geringer Sperrspannungsfestigkeit verwendet werden können, deren Duchlaßwiderstände dotierungsbedingt erheblich verringert sind, wird die insgesamt erzeugte Verlustleistung weiter reduziert.

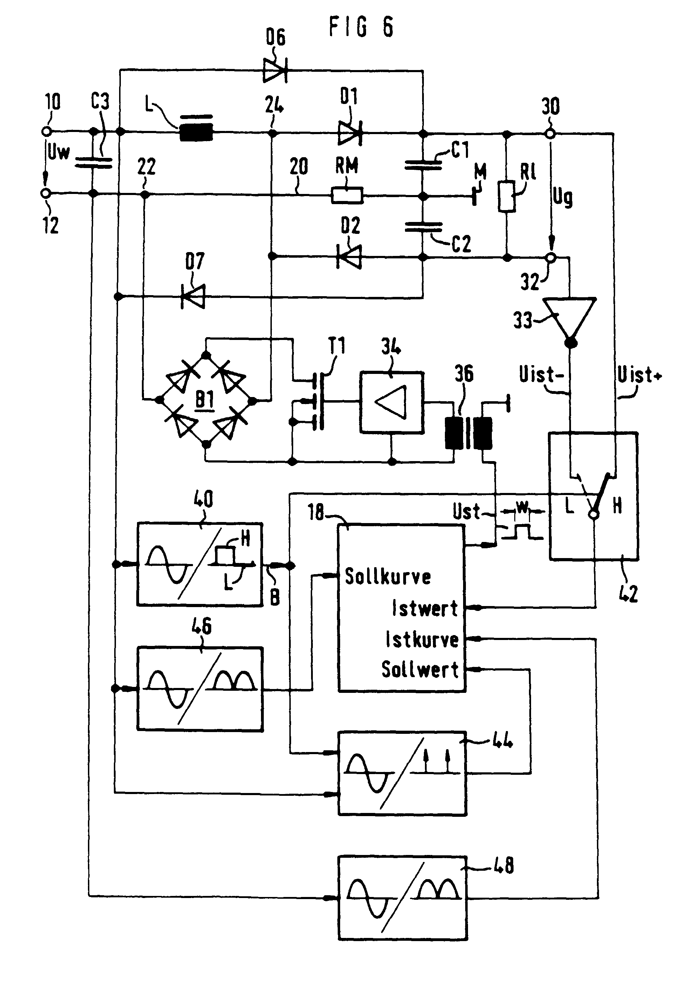

In Figur 6 ist das Ausführungsbeispiel nach den Figuren 2 und 3 um weitere Steuerungskomponenten ergänzt dargestellt. Bauteile, die mit denen in den Figuren 2 und 3 übereinstimmen, sind gleich bezeichnet. Die Verbindungsstelle zwischen den Ladekondensatoren C1, C2 ist auf Masse M gelegt. In die Verbindungsleitung 20 ist ein Strommeßwiderstand RM geschaltet, an dem die Kurvenform des Stroms als Spannungsverlauf abgegriffen wird. Die Gleichspannung Ug ist mit einem Lastwiderstand RI belastet. An den Klemmen 30 bzw. 32 kann eine positive Istspannung Uist+ bzw. eine negative Istspannung Uist- abgegriffen werden. Die negative Istspannung Uist- wird durch einen Inverterbaustein 33 in eine positive Spannung gewandelt.

Parallel zur Speicherdrossel L und erste Gleichrichterdiode D1 ist eine Diode D6 mit gleicher Polarität wie die Gleichrichterdiode D1 geschaltet. In analoger Weise ist eine Diode D7 mit zur Gleichrichterdiode D2 übereinstimmender Polarität parallel zur Speicherdrossel L und Gleichrichterdiode T2 geschaltet. Die Dioden D6 bzw. D7 leiten hohe Netzstörspannungen direkt zu den Ladekondensatoren C1 bzw. C2 weiter. Dadurch werden hohe Stromimpulse infolge von Netzstörungen, z.B. beim Ausschalten induktiver Lasten am Netz, an der Schalteinheit 16 vorbeigeführt. Die Ausfallsicherheit des Gesamtsystems wird dadurch erhöht.

Ein eingangsseitiger Kondensator C3 verringert die durch die Stromwelligkeit in der Speicherdrossel L erzeugte Störspannung, so daß das Wechselspannungsnetz nicht gestört wird.

Der Transistor T1 wird an seinem Gate über einen Verstärker 34 angesteuert, der aus einem Übertrager 36 gespeist wird. Der Übertrager 36 dient zur potentialfreien Ansteuerung des Transistors T1.

Der Übertrager 36 wird aus der Steuerung 18 mit Signalen Ust gespeist, deren Impulsbreite w variiert. Als Steuerung kann ein bekannter Baustein, beispielsweise der "High Power Factor Preregulator" UC 3854 der Firma Unitrode eingesetzt werden. Dieser Baustein erzeugt die Signale Ust mit einer vorgegebenen Frequenz von beispielsweise 60 kHz.

Die Steuerung 18 stellt die Impulsbreite w der Signale Ust so ein, daß die am Strommeßwiderstand RM abgreifbare Stromkurvenform mit der Kurvenform der Wechselspannung Uw übereinstimmt. Dadurch ist gewährleistet, daß im Wechselspannungsnetz keine schädlichen Oberwellen vorhanden sind. Ferner wird die Impulsbreite w der Signale Ust so gesteuert, daß eine Istspannung einem Sollwert nachgeregelt wird, wie noch beschrieben wird.

Da herkömmliche Steuerungen so aufgebaut sind, daß sie wie bei der bekannten Schaltung nach der Figur 1 nur Gleichspannungen verarbeiten können, im vorliegenden Fall die Speicherdrossel L aber von einem Wechselstrom durchflossen ist, sind weitere Bausteine erforderlich, die eine Anpassung an diese Gegebenheiten schaffen. Ein Halbwellenschalter 40 greift die Wechselspannung Uw ab und erzeugt an seinem Ausgang ein binäres Signal mit Zustand H während der postiven Halbwelle und mit Zustand L während der negativen Halbwelle. Dieses Binärsignal wird einem Istwertschalter 42 und einem Sollwertgenerator 44 zugeführt. Der Istwertschalter 42 schaltet abhängig vom Binärsignal B während der positiven Halbwelle die positive Istspannung Uist+ bzw. während der negativen Halbwelle die negative Istspannung Uist- an den Istspannungseingang der Steuerung 18 weiter.

Dem Sollwertgenerator 44 ist ferner die Wechselspannung Uw zugeführt. Er ermittelt abhängig vom Binärsignal B während der positiven Halbwelle den Spitzenwert der Wechselspannung Uw und gibt diesen Wert an den Sollwerteingang der Steuerung 18 ab. Während der negativen Halbwelle ermittelt der Sollwertgenerator 44 den negativen Spitzenwert der Wechselspannung Uw, richtet diesen Spitzenwert gleich und leitet diesen an den Sollwerteingang der Steuerung 18 weiter.

Einem Sollkurvengenerator 46 ist die Wechselspannung Uw zugeführt. Er richtet diese gleich und gibt das gleichgerichtete Signal an den Sollkurveneingang der Steuerung 18 weiter.

Weiterhin ist ein Istkurvengenerator 48 vorgesehen, dem eingangsseitig die am Strommeßwiderstand RM abfallende Spannung zugeführt ist. Der Istkurvengenerator 48 richtet diese Spannung gleich und führt sie dem Istkurveneingang der Steuerung 18 zu.

Im folgenden wird die Betriebsweise der Schaltungsanordnung nach Figur 6 beschrieben. Während der positiven Halbwelle der Wechselspannung Uw wird dem Sollkurveneingang der Steuerung 18 die Sollkurvenform über den Sollkurvengenerator 46 zugeführt. Ferner ist der Steuerung 18 über den Istkurvengenerator 48 die Istkurvenform des Stroms, der über die Leitung 20 fließt, an ihrem Istkurveneingang zugeführt. Die Steuerung 18 vergleicht die Sollkurvenform mit der Istkurvenform und stellt abhängig von diesem Vergleich die Impulsbreite w des Signals Ust, das die Schaltvorgänge im Transistor T1 veranlaßt, so ein, daß die Abweichung zwischen Sollkurve und Istkurve minimal wird. Während der negativen Halbwelle der Wechselspannung Uw führen der Sollkurvengenerator 46 und der Istkurvengenerator 48 eine Gleichrichtung durch, so daß auch während dieser Halbwelle eine Regelung der Stromkurvenform erfolgt.

Die Steuerung 18 führt auch eine Regelung der Spannung Ug zwischen den Klemmen 30, 32 durch. Während der positiven Halbwelle der Wechselspannung Uw wird dem Istspannungseingang über den Istwertschalter 42 die positive Istspannung Uist+ zugeführt. Ferner wird dem Sollwerteingang der Steuerung 18 über den Sollwertgenerator 44 die Amplitude, d.h. der positive Spitzenwert der Wechselspannung Uw eingegeben. Die Steuerung 18 regelt über die Impulsbreite w des Signals Ust die gegen Masse M positive Istspannung Uist+ der Amplitude der Wechselspannung Uw nach. Dies bedeutet, daß bei einem Absinken der Wechselspannung Uw auch die Istspannung Uist+ abgesenkt wird, d.h. die Gleichspannung Ug wird bei einer Änderung der Wechselspannung Uw gleichsinnig nachgeführt. Dadurch bleibt der Regelkreis in allen Betriebszuständen stabil.

Während der negativen Halbwelle der Wechselspannung Uw wird dem Istspannungseingang der Steuerung 18 die negative Istspannung Uist- bzw. dem Sollwerteingang der Betrag der Amplitude der Wechselspannung Uw zugeführt. Die Steuerung arbeitet so, daß in dieser Halbwelle die Spannung zwischen der Klemme 32 und Masse M nachgeregelt wird und damit die Gleichspannung Ug zwischen den Klemmen 32, 30 beeinflußt wird. Durch diese Aufteilung der Regelung während der positiven bzw. der negativen Halbwelle wird eine höhere Regelgenauigkeit erreicht.

Die vorgenannten Maßnahmen sind nicht auf ein sekundär getaktetes Schaltnetzgerät beschränkt, sondern können auch bei primärgetakteten Schaltnetzgeräten eingesetzt werden, die einen Hochfrequenztransformator enthalten. Ferner kann die vorgenannte Schaltungsanordnung auch für Schaltnetzgeräte eingesetzt werden, die wie im Beispiel nach der Figur 6 direkt mit Wechselspannung gespeist werden. Als Sollspannung wird vorzugsweise der Spitzenwert oder der Efektivwert der Wechselspannung Uw verwendet. Außerdem ist es möglich, während der positiven oder negativen Halbwellen der Wechselspannung jeweils den gleichgerichteten Spitzenwert oder den Effektivwert der jeweiligen Halbwelle als Sollspannung zu verwenden. Dadurch kann bei unsymmetrischer Wechselspannung Uw das Schaltnetzgerät 50 in jeder Halbwelle optimal betrieben werden.

**Patentansprüche**

1. Schaltspannungswandler zum Erzeugen einer Ausgangs-Gleichspannung aus einer Eingangs-Wechselspannung, mit den Merkmalen:

   - Ein Schalter (16, T1) ist über eine Induktivität (L) mit der Eingangswechselspannung verbunden, wobei die Induktivität ihrerseits mit Dioden (D1, D2) verbunden ist, welche die Ausgangs-Gleichspannung erzeugen,
   - eine Steuerschaltung (18, 58) steuert den Schalter derart, daß die Ausgangs-Gleichspannung entsprechend einem Vorgabewert (Uw) geregelt wird,
   - der Vorgabewert wird von der Eingangs-Wechselspannung derart gesteuert, daß bei zunehmender Eingangs-Wechselspannung die Ausgangs-Gleichspannung zunimmt,
   - die Dioden (D1, D2) sind mit zwei an einem Mittelpunkt verbundenen Kondensatoren (C1, C2) verbunden, an denen sich eine positive und eine negative Spannung gegenüber dem Mittelpunkt ausbilden,

   dadurch gekennzeichnet, daß

   - die Regelung der positiven Spannung nach einem aus den positiven Halbwellen der Eingangsspannung abgeleiteten Wert und die der negativen Spannung nach einem aus den negativen Halbwellen abgeleiteten Wert erfolgen.

2. Spannungswandler nach Anspruch 1, wobei der Vorgabewert aus dem Spitzenwert der jeweiligen Halbwelle der Eingangs-Wechselspannung abgeleitet ist.

3. Spannungswandler nach Anspruch 1 oder 2, wobei der Spannungswandler mit einer wesentlich oberhalb der Frequenz der Eingangsspannung liegenden Schaltfrequenz betrieben und so gesteuert wird, daß sein Eingangsstrom in etwa proportional dem Momentanwert der Eingangsspannung ist.

## Claims

1. Switched-mode voltage converter for producing a DC output voltage from an AC input voltage, having the features:

   - a switch (16, T1) is connected via an inductor (L) to the AC input voltage, the inductor, for its part, being connected to diodes (D1, D2) which produce the DC output voltage,
   - a control circuit (18, 58) controls the switch in such a manner that the DC output voltage is regulated at a predetermined value (Uw),
   - the predetermined value is controlled by the AC input voltage in such a manner that the DC output voltage increases when the AC input voltage increases,
   - the diodes (D1, D2) are connected to two capacitors (C1, C2) which are connected to a neutral point and across which a positive and a negative voltage are formed with respect to the neutral point,

   characterized in that

   - the positive voltage is regulated in accordance with a value derived from the positive half-cycles of the input voltage, and the negative voltage is regulated in accordance with a value derived from the negative half-cycles.

2. Voltage converter according to Claim 1, the predetermined value being derived from the peak value of the respective half-cycle of the AC input voltage.

3. Voltage converter according to Claim 1 or 2, the voltage converter being operated at a switching frequency which is considerably higher than the frequency of the input voltage, and being controlled such that its input current is approximately proportional to the instantaneous value of the input voltage.

## Revendications

1. Convertisseur de tension pour la production d'une tension continue de sortie à partir d'une tension alternative d'entrée, ayant les caractéristiques:

   - un interrupteur (16, T1) est relié par l'intermédiaire d'une inductance (L) à la tension alternative d'entrée, l'inductance étant reliée pour sa part à des diodes (D1,D2), qui produisent la tension continue de sortie,
   - un circuit (18,58) de commande commande l'interrupteur de telle sorte que la tension continue de sortie soit régulée en fonction d'une valeur (Uw) prescrite,
   - la valeur prescrite est commandée par la tension alternative d'entrée, de telle sorte que la tension continue de sortie augmente lorsque la tension alternative d'entrée augmente,
   - Les diodes (D1,D2) sont reliées à deux condensateurs (C1, C2) reliés à un point médian, aux bornes desquels se forme une tension positive et une tension négative par rapport au point médian,

   caractérisé en ce que

   - la régulation de la tension positive s'effectue suivant une valeur obtenue à partir des alternances positives de la tension d'entrée et celle de la tension négative s'effectue suivant une valeur obtenue à partir des alternances négatives.

2. Convertisseur de tension suivant la revendication 1, dans lequel la valeur prescrite est obtenue à partir de la valeur de crête de l'alternance respective de la tension alternative d'entrée.

3. Convertisseur de tension suivant la revendication 1 ou 2, dans lequel le convertisseur de tension fonctionne et est commandé à une fréquence de commutation nettement supérieure à la fréquence de la tension d'entrée, de telle sorte que son courant d'entrée soit à peu prés proportionnel à la valeur instantanée de la tension d'entrée.

# FIG 1

# FIG 2

FIG 3

FIG 4

FIG 5

FIG 6